# EUROPÄISCHE PATENTSCHRIFT

(11) **EP 2 845 392 B1**
(45) Veröffentlichungstag und Bekanntmachung des Hinweises auf die Patenterteilung: **26.10.2016**
(21) Anmeldenummer: 13709309.2
(22) Anmeldetag: 29.01.2013
(51) Int. Cl.: H04Q 9/00, H04B 1/3822, H04B 17/00, H04L 7/00

(54) **VERFAHREN ZUR FUNKTIONSPRÜFUNG EINER PSI5-EMPFANGSEINHEIT EINES KRAFTFAHRZEUGSTEUERGERÄTS SOWIE ENTSPRECHENDE PSI5-EMPFANGSEINHEIT**
METHOD FOR CHECKING THE OPERATION OF A PSI5 RECEPTION UNIT IN A MOTOR VEHICLE CONTROLLER, AND CORRESPONDING PSI5 RECEPTION UNIT
PROCÉDÉ POUR LA SURVEILLANCE DU FONCTIONNEMENT D'UNE UNITÉ DE RÉCEPTION PSI5 D'UN APPAREIL DE COMMANDE DE VÉHICULE AUTOMOBILE, AINSI QU'UNITÉ DE RÉCEPTION PSI5 CORRESPONDANTE

(30) Priorität: 03.05.2012 DE 102012103868
(43) Veröffentlichungstag der Anmeldung: 11.03.2015
(73) Patentinhaber: Continental Automotive GmbH, 30165 Hannover (DE)
(72) Erfinder: HAMPERL, Reinhard, 93096 Köfering (DE)
(74) Vertreter: Büchner, Jörg
(86) Internationale Anmeldenummer: PCT/DE2013/100030
(87) Internationale Veröffentlichungsnummer: WO 2013/163984

(56) Entgegenhaltungen:
- EP-A1- 1 441 491
- DE-A1- 10 112 844
- US-A1- 2009 292 961
- "PSI5 Peripheral Sensor Interface Specification V1.3", , 29. Juli 2008 (2008-07-29), Seiten 1-46, XP055028023, Gefunden im Internet: URL:http://www.psi5.org/en/pool/pdf/psi5_s pecification_v13_080729.pdf [gefunden am 2012-05-23]

## Beschreibung

Die Erfindung betrifft ein Verfahren zur Funktionsprüfung einer PSI5-Empfangseinheit eines Kraftfahrzeugsteuergeräts gemäß dem Oberbegriff des Anspruchs 1 sowie eine entsprechende PSI5-Empfangseinheit.

PSI5 ist eine standardisierte Schnittstelle der PSI5-Organisation (http://psi5.org) und basiert auf einer Zweidrahtleitung und wird in der Automobilelektronik zum Anschluss ausgelagerter Sensoren an elektronische Steuergeräte eingesetzt. Bei PSI5 werden zwei Leitungen genutzt, um sowohl die Sensoren zu versorgen als auch Daten zu übertragen. Das Steuergerät stellt eine Versorgungsspannung sowie aufmoduliert auf diese Versorgungsspannung Synchronisationsimpulse zur Verfügung. Die Synchronisations-impulse können. Durch gezieltes Auslassen von Synchronisationsimpulsen oder Variation von deren Länge können einige wenige Bit vom Steuergerät zum Sensor übertragen werden, um dort beispielsweise bestimmte Betriebszustände einzustellen. Die Datenübertragung vom Sensor zum Steuergerät erfolgt durch Strommodulation auf den Versorgungsleitungen.

Zur Erfassung von Fahrzeugs- Zustandsgrößen, beispielsweise zur Sensierung von Kollisionen werden im Fahrzeug mehrere Sensoren an Kraftfahrzeugsteuergeräte, beispielsweise ein zentrales Steuergerät für Insassenschutzeinrichtungen angeschlossen. Hierbei werden ein oder mehrere Sensoren über einen gemeinsamen Kommunikationsbus (PSI5) betrieben. Für die Aktivierung von Rückhaltemittel werden aus Sicherheitsgründen immer Signale von zwei unabhängigen Sensoren benötigt. Werden die Daten von zwei unabhängigen Sensoren mittels eines einzigen Receivers empfangen, kann ein einzelner Fehler in diesem Receiver zur fehlerhaften Veränderung beider Sensorsignale - und damit zu einem sicherheitskritischen Fehlverhalten führen. Insbesondere erfolgt während des normalen Betriebszyklus keine Prüfung der Empfangseinheit.

Aus der US 2009/0292961 A1 ist ein integrierter Schaltkreis mit einer Mehrzahl von Sendern und Empfängern vorgesehen, bei denen zum Funktionstest eines Empfängers der Ausgang eines Sender unmittelbar auf den zu testenden Empfänger geschaltet wird. Dies setzt jedoch eine identische Signalübertragung vom Steuergerät zum Sensor als auch vom Sensor zum Steuergerät voraus, was bei PSI5 gerade nicht der Fall ist. Aufgabe der Erfindung ist daher, ein Verfahren zur Funktionsprüfung einer PSI5-Empfangseinheit sowie eine entsprechend geeignete Empfangseinheit anzugeben. Diese Aufgabe wird durch die Merkmale der unabhängigen Ansprüche gelöst. Vorteilhafte Weiterbildungen sind den Unteransprüchen zu entnehmen.

Grundgedanke der Erfindung ist dabei, dass die Empfangseinheit eine interne Prüfsignalsendeeinheit aufweist und diese Prüfsignalsendeeinheit zu vorgegebenen Prüfzeitpunkten, in welchen kein Signal von der Sendeeinheit zu erwarten ist, ein vorgegebenes Prüfsignal intern an die Empfangseinheit sendet. Eine besonders geeignete Zeitspanne ergibt sich, da die Empfangseinheit der Sendeeinheit einen oder mehrere Synchronisationsimpulse sendet und die Sendeeinheit erst nach Ablauf einer definierten Zeitspanne ihre Signale sendet und die Prüfsignalsendeeinheit vorzugsweise in dieser definierten Zeitspanne das Prüfsignal sendet.

So kann in einer besonders bevorzugten Ausgestaltung zusammen mit dem Synchronisationsimpuls an die Sendeeinheit die Empfangseinheit die Prüfsignalsendeeinheit zum Senden des Prüfsignals initiieren.

Vorzugsweise enthält das Prüfsignal eine vorgegebene, d.h. bekannte Bitfolge und wird geprüft, ob die Empfangseinheit diese korrekt empfängt und verarbeitet. Neben der identischen Übereinstimmung mit der vorgegebenen Bitfolge kann also beispielsweise auch geprüft werden, ob darin enthaltene erkennbare Fehler, wie beispielsweise Prüfsummenfehler o.dgl. erkannt werden.

Zudem wird vorzugsweise verhindert, dass die Empfangseinheit das Prüfsignal an eine nachfolgende Signalverarbeitung weiterleitet oder diese Signalverarbeitung dies nicht als Prüfsignal erkennt. Dazu kann das Prüfsignal beispielsweise mit einer entsprechenden Kennung versehen werden oder wird die Weiterleitung durch die Steuerung in der Empfangseinheit unterdrückt.

Die Schaltung des Receivers wird also zyklisch in den Kommunikationspausen geprüft. Wird bei der Prüfung des Receivers ein Fehler festgestellt, werden die Sensordaten vom Receiver solange als fehlerhaft gekennzeichnet bis wieder eine ordnungsgemäße Funktion des Receivers festgestellt werden konnte.

Die Prüfung erfolgt durch Einspeisen eines bekannten 'Bitstreams' anstelle des Bussignals und Prüfung der empfangenen Daten. Die Prüfsignalsendeeinheit kann das Prüfsignal über eine interne Verbindungsleitung innerhalb der Empfangseinheit leiten oder alternativ über einen Ausgang an den entsprechenden Eingang der Empfangseinheit.

Die Prüfung erfolgt auf einem synchronen Bus vorzugsweise zeitgleich zum Bus-Synchronisationssignal, da zu dieser Zeit ohnehin das Bussignal nicht an den Receiver weitergeben wird. Es ist für die Erfindung unerheblich, ob der Synchronisationsimpuls dabei auf einer gemeinsamen bidirektionalen Bus-Datenleitung zwischen Sendeeinheit und Empfangseinheit übertragen wird oder es sich um 2 separate Leitungen oder Kanäle handelt.

Diese Erfindung eignet sich beispielsweise für die Anbindung von Seiten-Sensoren mittels eines PSI5 Busses und Überprüfung des Receivers alle 500µs parallel zur Ausgabe des Synchronisations-Pulses.

Die Erfindung wird nachfolgend anhand von Figuren und Ausführungsbeispielen näher beschrieben. Es zeigen:
Figur 1 Fahrzeugsteuergerät mit entsprechender Empfangseinheit
Figur 2 Skizze des zeitlichen Ablaufs des Verfahrens

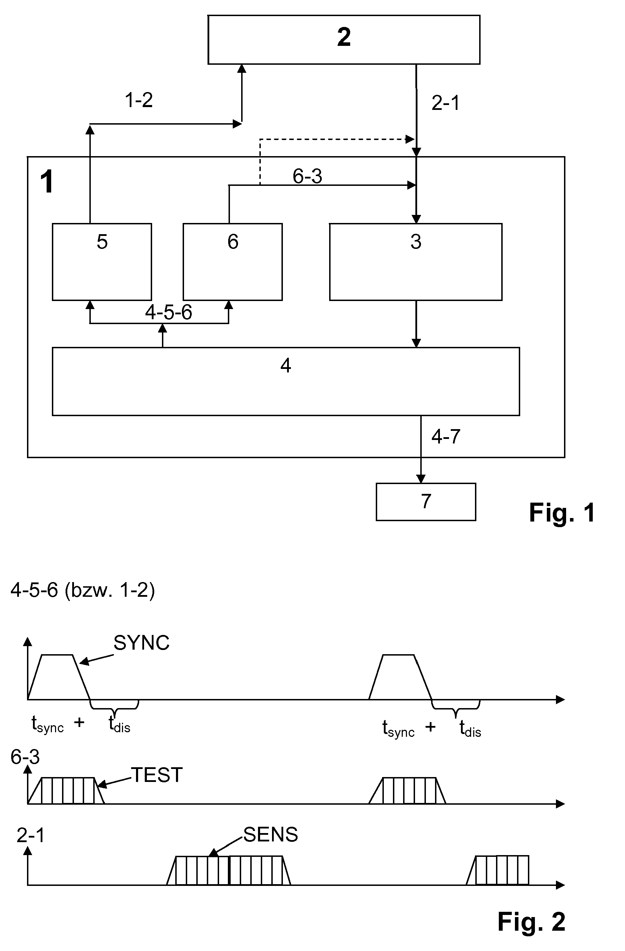

Die Figur 1 zeigt ein Kraftfahrzeug-Steuergerät mit einer PSI5-Empfangseinheit (1) sowie einer PSI5-Sendeeinheit (2), beispielsweise einem aus dem Steuergerät ausgelagerten Sensorsatelliten, wobei sich die Erfindung auch auf interne Sensoren in Steuergerät anwenden lässt und unerheblich ist, ob ein oder mehrere Sensoren an diesem einen Anschluss der Empfangseinheit 1 angeschlossen sind. Zwischen dem Steuergerät und dem ausgelagerten Sensorsatelliten besteht also eine Datenübertragung gemäß dem PSI5-Protokoll.

Die PSI5-Sendeeinheit (2) sendet vorzugsweise zyklisch Sensorsignale (SENS) an den Anschluss der PSI5-Empfangseinheit 1. Diese werden von der PSI5-Empfangseinheit 1 empfangen und vorzugsweise auch verarbeitet, das heißt beispielsweise geprüft und in ein anderes Protokoll umgesetzt und so an die Signalverarbeitung 7 weitergeleitet. Die PSI5-Empfangseinheit (1) weist eine hier intern dargestellte, grundsätzlich aber auch extern mögliche Prüfsignalsendeeinheit (6) auf, wobei diese Prüfsignalsendeeinheit (6) so ausgebildet ist, dass diese zu vorgegebenen Prüfzeitpunkten, in welchen kein Signal (SENS) von der PSI5-Sendeeinheit (2) zu erwarten ist, ein vorgegebenes Prüfsignal (Test) an die Empfangseinheit (1) sendet.

Die PSI5-Empfangseinheit (1) sendet der Sendeeinheit (2) einen oder mehrere Synchronisationsimpulse (SYNC) und die PSI5-Sendeeinheit (2) sendet erst nach Ablauf einer definierten Zeitspanne ihre Signale. Diese definierten Zeitspanne besteht gerade bei bidirektionalem Bussystem zumindest aus der Dauer t_{sync} des Synchronisationsimpulses und einer Entladezeit t_{dis}, welche erforderlich ist, um die gemeinsame Leitung von den Auswirkungen des Synchronisationsimpulses zu entladen.

Wie bereits eingangs erwähnt, bietet sich diese Pause in der Buskommunikation an, um währenddessen der PSI5-Empfangseinheit 1 das Prüfsignal zuzuführen und in der PSI5-Empfangseinheit 1 den korrekten Empfang zu überprüfen. Die Prüfsignalsendeeinheit (6) sendet also in dieser definierten Zeitspanne t_{sync} + t_{dis} das Prüfsignal (Test).

Es ist dabei unerheblich, ob das Prüfsignal von einer internen Prüfsignalsendeeinheit 6 über eine interne Verbindung 6-3 an den Empfänger 3 der PSI5-Empfangseinheit 1 geleitet wird oder, wie beispielsweise gestrichelt dargestellt, über einen Ausgang an den Eingang der Empfangseinheit 1 oder sogar Prüfsignalsendeeinheit 6 selbst extern angeordnet ist. Durch eine interne Anordnung und Weiterleitung können jedoch Störungen vermieden werden und ist insofern eine interne Realisierung zu bevorzugen. Beispielsweise ausgelöst durch die gemeinsame Steuerung 4 der PSI5-Empfangseinheit (1) kann zusammen mit dem Synchronisationsimpuls (SYNC) an die PSI5-Sendeeinheit (2), welcher beispielsweise durch den PSI5-konformen Synchronisations-Puls-Generator 5 erzeugt wird, die Prüfsignalsendeeinheit (6) zum Senden des Prüfsignals (Test) initiiert werden, d.h. das interne Signal über die Leitung 4-5-6 sorgt einerseits für den Synchronisationsimpuls (SYNC) auf der Leitung 1-2, andererseits für das Prüfsignal (TEST).

Damit bleibt der PSI5-Empfangseinheit 1 genügend Zeit, um das Prüfsignal intern zu bearbeiten und beispielsweise durch die Steuerung 4 überprüfen zu lassen, ob das Prüfsignal korrekt empfangen wurde, alle Fehler- Prüfroutinen korrekt abgearbeitet wurden und eventuell absichtlich im Prüfsignal hinterlegte Fehler erkannt wurden und zudem sichergestellt wird, dass das Prüfsignal (Test) nicht an eine nachfolgende Signalverarbeitung (7) weiterleitet wird.

Alternativ ist denkbar, dass die Signalverarbeitung (7) das Prüfsignal (Test) anhand einer Kennung oder dergleichen als Prüfsignal erkennt und so nicht etwa mit einem Sensorsignal verwechselt und bei der Signalverarbeitung berücksichtigt.

Wird bei der Prüfung des Receivers (3) ein Fehler festgestellt, werden die Sensordaten vom Receiver solange als fehlerhaft gekennzeichnet bis wieder eine ordnungsgemäße Funktion des Receivers festgestellt werden konnte.

## Patentansprüche

1. Verfahren zur Funktionsprüfung einer PSI5-Empfangseinheit (1) eines Kraftfahrzeugsteuergeräts, wobei die Empfangseinheit (1) von einer angeschlossenen PSI5-Sendeeinheit (2) Signale (SENS) empfängt, **dadurch gekennzeichnet, dass** die PSI5-Empfangseinheit (1) eine Prüfsignalsendeeinheit (6) aufweist und diese Prüfsignalsendeeinheit (6) zu vorgegebenen Prüfzeitpunkten, in welchen kein Signal (SENS) von der PSI5-Sendeeinheit (2) zu erwarten ist, ein vorgegebenes Prüfsignal (Test) an die PSI5-Empfangseinheit (1) sendet.

2. Verfahren nach Anspruch 1, **dadurch gekennzeichnet, dass** die Empfangseinheit (1) der Sendeeinheit (2) einen oder mehrere Synchronisationsimpulse (SYNC) sendet und die Sendeeinheit (2) erst nach Ablauf einer definierten Zeitspanne ihre Signale sendet und die Prüfsignalsendeeinheit (6) in dieser definierten Zeitspanne das Prüfsignal (Test) sendet.

3. Verfahren nach Anspruch 2, **dadurch gekennzeichnet, dass** zusammen mit dem Synchronisationsimpuls (SYNC) an die Sendeeinheit (2) die Empfangseinheit (1) die Prüfsignalsendeeinheit (6) zum Senden des Prüfsignals (Test) initiiert.

4. Verfahren nach einem der vorangehenden Ansprüche, **dadurch gekennzeichnet, dass** das Prüfsignal (Test) eine vorgegebene Bitfolge enthält und geprüft wird, ob die Empfangseinheit (1) diese korrekt empfängt und verarbeitet.

5. Verfahren nach einem der vorangehenden Ansprüche, **dadurch gekennzeichnet**, die Empfangseinheit (1) das Prüfsignal (Test) nicht an eine nachfolgende Signalverarbeitung (7) weiterleitet oder diese Signalverarbeitung (7) als Prüfsignal (Test) erkennt.

6. Kraftfahrzeugsteuergerät mit einer PSI5-Empfangseinheit (1), wobei die PSI5-Empfangseinheit (1) einen Anschluss zum Anschließen einer PSI5-konformen Sendeeinheit (2) und Empfang von Signalen (SENS) aufweist, **dadurch gekennzeichnet, dass** eine Prüfsignalsendeeinheit (6) vorgesehen und diese Prüfsignalsendeeinheit (6) so ausgebildet ist, dass diese zu vorgegebenen Prüfzeitpunkten, in welchen kein Signal (SENS) von der PSI5-Sendeeinheit (2) zu erwarten ist, ein vorgegebenes Prüfsignal (Test) an die PSI5-Empfangseinheit (1) sendet.

7. Kraftfahrzeugsteuergerät nach Anspruch 6, **dadurch gekennzeichnet** das die PSI5-Empfangseinheit (1) so ausgebildet ist, dass diese der PSI5-Sendeeinheit (2) einen oder mehrere Synchronisationsimpulse sendet, wobei die PSI5-Sendeeinheit (2) erst nach Ablauf einer definierten Zeitspanne ihre Signale (SENS) sendet und die Prüfsignalsendeeinheit (6) in dieser definierten Zeitspanne das Prüfsignal sendet.

8. Kraftfahrzeugsteuergerät nach Anspruch 6 oder 7, **dadurch gekennzeichnet, dass** die Empfangseinheit (1) so ausgebildet ist, dass zusammen mit dem Synchronisationsimpuls an die Sendeeinheit (2) die Prüfsignalsendeeinheit (6) zum Senden des Prüfsignals (Test) initiiert wird.

9. Kraftfahrzeugsteuergerät nach einem der Ansprüche 6 bis 8, **dadurch gekennzeichnet, dass** die Prüfsignalsendeeinheit (6) von dem Synchronisations-Puls-Generator (5) unterschiedlich ist.

10. PSI5-Empfangseinheit (1) für ein Kraftfahrzeugsteuergerät nach einem der Ansprüche 6 bis 9, wobei die PSI5-Empfangseinheit (1) eine interne Prüfsignalsendeeinheit (6) aufweist.

## Claims

1. A method for checking the operation of a PSI5 reception unit (1) in a motor vehicle controller, wherein the reception unit (1) receives signals (SENS) from a connected PSI5 transmission unit (2), **characterized in that** the PSI5 reception unit (1) comprises a check signal transmission unit (6) and this check signal transmission unit (6) sends a prescribed check signal (test) to the PSI5 reception unit (1) at prescribed check times at which no signal (SENS) can be expected from the PSI5 transmission unit (2).

2. The method according to Claim 1, **characterized in that** the reception unit (1) sends one or more synchronization pulses (SYNC) to the transmission unit (2) and the transmission unit (2) does not send its signals until after the end of a defined period and the check signal transmission unit (6) sends the check signal (test) in this defined period.

3. The method according to Claim 2, **characterized in that**, together with the synchronization pulse (SYNC) to the transmission unit (2), the reception unit (1) initiates the check signal transmission unit (6) to send the check signal (test).

4. The method according to any one of the preceding claims, **characterized in that** the check signal (test) contains a prescribed bit sequence and a check is carried out as to whether the reception unit (1) is receiving and processing said bit sequence correctly.

5. The method according to any one of the preceding claims, **characterized in that** the reception unit (1) does not forward the check signal (test) to subsequent signal processing (7) or identifies this signal processing (7) as a check signal (test).

6. A motor vehicle controller having a PSI5 reception unit (1), wherein the PSI5 reception unit (1) comprises a port for connecting a PSI5-compliant transmission unit (2) and for receiving signals (SENS), **characterized in that** a check signal transmission unit (6) is provided and this check signal transmission unit (6) is configured such that the latter sends a prescribed check signal (test) to the PSI5 reception unit (1) at prescribed check times at which no signal (SENS) can be expected from the PSI5 transmission unit (2).

7. The motor vehicle controller according to Claim 6, **characterized in that** the PSI5 reception unit (1) is configured such that the latter sends one or more synchronization pulses to the PSI5 transmission unit (2), wherein the PSI5 transmission unit (2) does not send its signals (SENS) until after the end of a defined period and the check signal transmission unit (6) sends the check signal in this defined period.

8. The motor vehicle controller according to Claim 6 or 7, **characterized in that** the reception unit (1) is configured such that, together with the synchronization pulse to the transmission unit (2), the check signal transmission unit (6) is initiated to send the check signal (test).

9. The motor vehicle controller according to any one of Claims 6 to 8, **characterized in that** the check signal transmission unit (6) differs from the synchronization pulse generator (5).

10. A PSI5 reception unit (1) for a motor vehicle controller according to any one of Claims 6 to 9, wherein the PSI5 reception unit (1) comprises an internal check signal transmission unit (6).

## Revendications

1. Procédé pour la surveillance du fonctionnement d'une unité de réception PSI5 (1) d'un appareil de commande de véhicule automobile, l'unité de réception (1) recevant des signaux (SENS) d'une unité d'émission PSI5 (2) connectée, **caractérisé en ce que** l'unité de réception PSI5 (1) présente une unité d'émission de signaux de test (6) et cette unité d'émission de signaux de test (6) envoie, à des instants de test prédéterminés dans lesquels il n'y a pas lieu d'attendre de signal (SENS) de l'unité d'émission PSI5 (2), un signal de test (Test) prédéterminé à l'unité de réception PSI5 (1).

2. Procédé selon la revendication 1, **caractérisé en ce que** l'unité de réception (1) envoie à l'unité d'émission (2) une ou plusieurs impulsions de synchronisation (SYNC), et l'unité d'émission (2) n'envoie ses signaux qu'à l'expiration d'une période de temps définie, et l'unité d'émission de signaux de test (6) envoie le signal de test (Test) pendant cette période de temps définie.

3. Procédé selon la revendication 2, **caractérisé en ce que**, conjointement à l'impulsion de synchronisation (SYNC) destinée à l'unité d'émission (2), l'unité de réception (1) conduit l'unité d'émission de signaux de test (6) à envoyer le signal de test (Test).

4. Procédé selon l'une des revendications précédentes, **caractérisé en ce que** le signal de test (Test) contient une séquence binaire prédéfinie et **en ce qu'**il est vérifié si l'unité de réception (1) reçoit et traite correctement cette séquence.

5. Procédé selon l'une des revendications précédentes, **caractérisé en ce que** l'unité de réception (1) ne transmet pas le signal de test (Test) pour un traitement ultérieur du signal ou bien détecte ce traitement du signal (7) en tant que signal de test.

6. Appareil de commande de véhicule automobile avec une unité de réception PSI5 (1), l'unité de réception PSI5 (1) présentant une connexion pour la connexion d'une unité d'émission (2) conforme au PSI5 et pour la réception de signaux (SENS), **caractérisé en ce qu'**il est prévu une unité d'émission de signaux de test (6) et **en ce que** cette unité d'émission de signaux de test (6) est constituée de telle sorte qu'elle envoie, à des instants de test prédéterminés dans lesquels il n'y a pas lieu d'attendre de signal (SENS) de l'unité d'émission PSI5 (2), un signal de test (Test) prédéterminé à l'unité de réception PS15 (1).

7. Appareil de commande de véhicule automobile selon la revendication 6, **caractérisé en ce que** l'unité de réception PSI5 (1) est constituée de telle sorte qu'elle envoie à l'unité d'émission PSI5 (2) une ou plusieurs impulsions de synchronisation, l'unité d'émission PSI5 (2) n'envoyant ses signaux (SENS) qu'à l'expiration d'une période de temps définie, et l'unité d'émission de signaux de test (6) envoyant le signal de test (Test) pendant cette période de temps définie.

8. Appareil de commande de véhicule automobile selon la revendication 6 ou 7, **caractérisé en ce que** l'unité de réception (1) est constituée de telle sorte que, conjointement à l'impulsion de synchronisation destinée à l'unité d'émission (2), l'unité d'émission de signaux de test (6) est conduite à envoyer le signal de test (Test).

9. Appareil de commande de véhicule automobile selon l'une des revendications 6 à 8, **caractérisé en ce que** l'unité d'émission de signaux de test (6) est distincte du générateur d'impulsions de synchronisation (5).

10. Unité de réception PSI5 (1) pour un appareil de commande de véhicule automobile selon l'une des revendications 6 à 9, l'unité de réception PSI5 (1) présentant une unité interne d'émission de signaux de test (6).
